# EUROPÄISCHE PATENTSCHRIFT

(11) **EP 3 750 844 B1**
(45) Veröffentlichungstag und Bekanntmachung des Hinweises auf die Patenterteilung: **08.09.2021**
(21) Anmeldenummer: 20178987.2
(22) Anmeldetag: 09.06.2020
(51) Int. Cl.: B66F 9/06, B66F 9/075, B66F 17/00, G05D 1/02

(54) **FLURFÖRDERZEUG MIT EINER FAHRZEUGSTEUERUNG FÜR EINEN AUTOMATISCHEN BETRIEB**
INDUSTRIAL TRUCK WITH A VEHICLE CONTROL FOR AUTOMATIC OPERATION
CHARIOT DE MANUTENTION DOTÉ D'UNE COMMANDE DE VÉHICULE POUR UN FONCTIONNEMENT AUTOMATIQUE

(30) Priorität: 11.06.2019 DE 102019115864
(43) Veröffentlichungstag der Anmeldung: 16.12.2020
(73) Patentinhaber: Jungheinrich Aktiengesellschaft, 22047 Hamburg (DE)
(72) Erfinder: Flottran, Dennis, 23881 Breitenfelde (DE)
(74) Vertreter: Hauck Patentanwaltspartnerschaft mbB

(56) Entgegenhaltungen:
- EP-A1- 2 339 376
- EP-A1- 3 216 743
- US-A1- 2019 137 991

## Beschreibung

Die vorliegende Erfindung betrifft ein Flurförderzeug, das eine Fahrzeugsteuerung für einen automatischen Betrieb aufweist.

Flurförderzeuge, deren Fahrzeugsteuerung für einen automatischen Betrieb geeignet ist, werden zunehmend in der Logistik eingesetzt. Solche Fahrzeuge werden gelegentlich auch als automatisierte Fahrzeuge, Automated Guided Vehicles (AGV) bezeichnet. Je nach Automatisierungsgrad kann hier zwischen teil- und vollautomatisierten Fahrzeugen unterschieden werden. Der unterschiedliche Grad an Automatisierung bezieht sich hierbei insbesondere auf die Aufgaben, die von dem Flurförderzeug automatisch ausgeführt werden können. Automatische Fahrzeuge sind aus Sicherheitsgründen stets mit einem Personenschutzsystem ausgestattet. Das Personenschutzsystem erkennt die Gefahr einer möglichen Kollision mit einer Person oder einem Gegenstand und greift entsprechend in die Steuerung ein, dies kann beispielsweise durch ein Abbremsen des Fahrzeugs und/oder durch ein Ausweichmanöver des Fahrzeugs erfolgen. Personenschutzsysteme besitzen stets eine Abstandsmesseinrichtung, mit der die Umgebung des Fahrzeugs erfasst und Abstände zu Hindernissen und Personen auch während der Fahrt erfasst werden. Um eine einwandfreie Funktionsweise des Personenschutzsystems sicherstellen zu können, werden eine oder mehrere Schutzzonen für die Abstandsmesseinrichtung bzw. das Personenschutzsystem definiert. Die Schutzzone bezeichnet damit einen räumlichen Bereich in der Umgebung des Fahrzeugs, der frei von Hindernissen, Personen und anderen Objekten sein muss, damit ein automatisierter Betrieb, insbesondere eine Fahrt, erfolgen kann. Die EP 2 339 376 A1 offenbart ein Flurförderzeug gemäß dem Oberbegriff des unabhängigen Anspruchs 1.

Aufgebaut sind derartige Flurförderzeuge, deren Fahrzeugsteuerung für den automatischen Betrieb geeignet ist, dahingehend, dass ein in dem automatischen Betrieb gesteuertes Lasttragmittel und ein in dem automatischen Betrieb gesteuerter Fahrantrieb vorliegen. Selbstverständlich ist es hierbei so, dass für einen nicht automatischen Betrieb die Steuerung über entsprechende Bedienelemente manuell erfolgen kann, auch kann vorgesehen sein, dass ein manueller Eingriff in die Bedienelemente die automatische Steuer überdeckt.

In der Lagertechnik wird mit dem Begriff der Blocklagerung die Lagerung der Güter ohne Regal oder eine vergleichbare Konstruktion bezeichnet. Bei der Blocklagerung kann zwischen einer horizontalen Lagerung und einer vertikalen Stapelung unterschieden werden, wobei bei der vertikalen Blocklagerung die zu lagernden Güter direkt übereinander gestellt werden. Bei der horizontalen Blocklagerung werden die Güter in einer Ebene nebeneinander abgelegt. Hierbei ist es wünschenswert, dass vorgegebene Abstände zwischen den Gütern bei der horizontalen Blocklagerung eingehalten werden.

Der Erfindung liegt die Aufgabe zugrunde, eine für den automatischen Betrieb geeignetes Flurförderzeug bereitzustellen, das eine Blocklagerung unterstützen kann.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Die Erfindung betrifft ein Flurförderzeug, dessen Fahrzeugsteuerung für einen automatischen Betrieb geeignet ist. Das erfindungsgemäße Flurförderzeug weist ein in dem automatischen Betrieb gesteuertes Lasttragmittel, einen in dem automatischen Betrieb gesteuerten Fahrantrieb und ein Personenschutzsystem auf. Das Personenschutzsystem wertet mindestens eine Schutzzone vor dem Lasttragmittel aus, wobei das Personenschutzsystem eine Abstandsmesseinrichtung aufweist, die Abstandsdaten zu Gegenständen und Hindernissen innerhalb der mindestens einen Schutzzone erfasst. Erfindungsgemäß ist vorgesehen, dass die Fahrzeugsteuerung dazu ausgebildet ist, mehrere Ladungsträger in einem vorbestimmten Abstand zueinander abzustellen und/oder aufzunehmen. Dies bedeutet, dass die Fahrzeugsteuerung dazu ausgebildet ist, diesen Ablauf, der daraus besteht, mehrere Ladungsträger abzustellen und/oder aufzunehmen, automatisch durchzuführen. In besonders einfacher Form ist dies möglich, indem zur automatischen Steuerung von Lasttragmittel und Fahrantrieb auf die Abstandsdaten des Personenschutzsystems zurückgegriffen wird. Die Erfindung beruht also auf dem Gedanken, die für die horizontale Blocklagerung erforderlichen Daten nicht durch gesonderte Sensoren zu erfassen, sondern die bereits vorhandene Sensorik mit den Abstandsmessdaten des Personenschutzsystems auch für diese Aufgabe zu nutzen. Wesentlich hierbei ist, dass die Funktion des Personenschutzsystems nicht eingeschränkt wird, sondern ein Rückgriff auf die Abstandsdaten des Personenschutzsystems erfolgen kann, ohne deren Auswertung im Hinblick auf den Personenschutz einzuschränken.

In einer bevorzugten Ausgestaltung ist das Personenschutzsystem dazu ausgebildet, die von der Abstandsmesseinrichtung erfassten Abstandsdaten für die Fahrzeugsteuerung direkt auszuwerten. Bei dieser Ausgestaltung stellt das Personenschutzsystem also die gewonnenen Abstandsdaten als Rohwerte für die Fahrzeugsteuerung zur Verfügung. Für die horizontale Blocklagerung erweist es sich als vorteilhaft, für die Fahrzeugsteuerung und/oder das Personenschutzsystem eine Teach-In-Funktion vorzusehen, bei der manuell der gewünschte Abstand angefahren und für den automatischen Betrieb gespeichert wird. Die gewonnenen Abstandsdaten werden bei diesem Ansatz zusätzlich im Hinblick auf den Personenschutz ausgewertet und als solche verarbeitet. Durch den Teach-In-Vorgang, bei dem das Flurförderzeug manuell zur gewünschten Bewegung angesteuert wird, können entsprechende Grenzwerte und Schwellwerte für die Parameter und Abstandswerte gesetzt werden, so dass im automatischen Betrieb die Fahrzeugsteuerung das Verfahren aus dem Teach-In-Vorgang wiederholt.

Bei einem alternativen oder zusätzlichen Ansatz kann vorgesehen sein, dass die Schutzzone oder einzelne Schutzzonen in ihrer Lage und in ihren Abständen so bemessen sind, dass es den gewünschten Abständen für die Ladungsträger entspricht. Bei diesem Ansatz ist es dann nicht länger erforderlich, dass eine zweifache Verarbeitung der Abstandsdaten erfolgt, sondern es wird auch für die Aufgabe der horizontalen Blocklagerung auf die Verarbeitung der Abstandsdaten wie für den Personenschutz zurückgegriffen.

In einer bevorzugten Weiterbildung ist vorgesehen, den Fahrantrieb für eine automatische Fahrt anzusteuern, bis das Personenschutzsystem und/oder die Fahrzeugsteuerung den vorbestimmten Abstand erkannt hat. Mit dieser Ausgestaltung ist sichergestellt, dass das Fahrzeug von einem ersten Absetz- oder Lagerpunkt automatisch zu dem nächsten Lagerpunkt fahren kann.

Ist der vorbestimmte Abstand erkannt, liegt also die nächste Lagerposition vor, so dass die nächste Last abgesetzt oder aufgenommen werden kann.

In einer bevorzugten Ausgestaltung ist als Abstandsmesseinrichtung ein Laserscanner vorgesehen, der zweckmäßigerweise in Richtung der Lasttragmittel orientiert ist.

In einer weiteren Ausgestaltung der Erfindung können Schutzzonen je nach Aufgabe unterschieden werden. So kann vorgesehen sein, dass eine erste Schutzzone für den Personenschutz, insbesondere für den Personenschutz mit einer vorbestimmten Schutzklasse beispielsweise nach DIN EN 1525 vorgesehen ist. Mindestens eine zweite Schutzzone kann in ihrer Lage und/oder ihren Abmessungen für einen automatisierten Ablage-/Aufnahmevorgang ausgebildet sein. Auf diese Weise können Personenschutz und automatisierter Betrieb durch die Schutzzonen gesteuert werden. Je nach Lage und wechselseitiger Überdeckung der Schutzzonen kann auch vorteilhaft sein, wenn die erste Schutzzone für einen automatisierten Ablage-/Aufnahmevorgang abgeschaltet wird. Das Abschalten der ersten Schutzzone führt nicht zu einem verminderten Personenschutz, denn mit geeigneter Lage der zweiten Schutzzone kann der Personenschutz bereits durch die räumlichen Gegebenheiten verwirklicht sein, auch wenn die zweite Schutzzone für die Steuerung des automatisierten Ablage-/Aufnahmevorgang ausgebildet ist.

Eine bevorzugte Ausgestaltung der Erfindung wird nachfolgend an einem Ausführungsbeispiel erläutert. Es zeigen:
- Fig. 1: eine schematische Ansicht eines automatisierten Fahrzeugs mit drei Lastträgern in der Ansicht von der Seite und
- Fig. 2: ein Flussdiagramm für den in der Fahrzeugsteuerung ablaufenden Vorgang der horizontalen Blocklagerung.

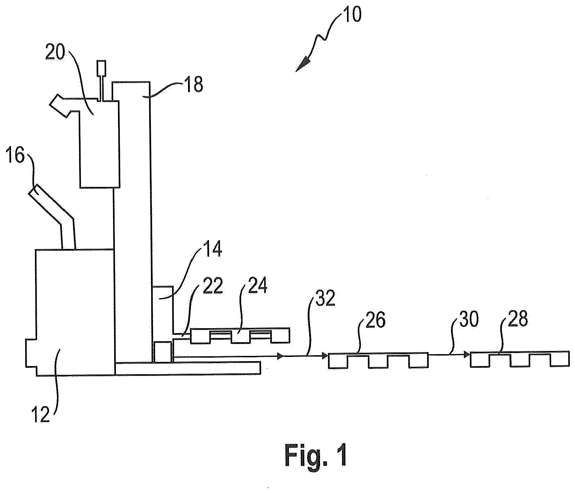

Fig. 1 zeigt in einer schematischen Ansicht ein automatisiertes Fahrzeug 10, dass ein Lastteil 14 und ein Antriebsteil 12 aufweist. Das Antriebsteil 12 ist mit einem Steuerorgan 16 ausgestattet, das eine manuelle Steuerung des Flurförderzeugs im Hinblick auf Richtung und Fahrgeschwindigkeit erlaubt. Auch weitere Funktionseinheiten, wie beispielsweise Heben und Senken sowie Hupen, können mit dem Steuerorgan 16 betätigt werden. Das Antriebsteil 12 verfügt zudem über einen Antriebsmotor sowie mindestens ein angetriebenes und gelenktes Rad (nicht dargestellt).

Das Lastteil 14 besitzt in dem dargestellten Ausführungsbeispiel einen Hubmast 18, an dem die Fahrzeugsteuerung 20 angebracht ist. Die Fahrzeugsteuerung 20 kann beispielsweise zusätzlich mit Warnleuchten ausgestattet sein und über eine Funkverbindung zu einem Lagerverwaltungssystem verfügen. Der Hubmast 18 besitzt ein Lasttragmittel 22, das in Fig. 1 in der angehobenen Position dargestellt ist. Das Lasttragmittel 22 kann beispielsweise zwei parallel zueinander verlaufende Lastgabeln aufweisen. Das Lasttragmittel 22 ist in Fig. 1 in einer leicht angehobenen Position dargestellt, mit einer Palette 24 ohne Last beladen.

Die horizontale Blocklagerung, die in Fig. 1 dargestellt ist, besteht beispielsweise aus den Paletten 24, 26 und 28. Zwischen diesen Paletten ist stets der gleiche Abstand 32 vorgesehen. Wird die dargestellte Blocklagerung beispielsweise aufgebaut, so setzt das Flurförderzeug 10 die Palette 28 zuerst ab. Danach fährt das Flurförderzeug mit seinem Antrieb um die Strecke 30 zurück (entgegen der Pfeilrichtung), um hier die Palette 26 abzusetzen. Nach einer weiteren Fahrt um eine Strecke (entgegen deren Pfeilrichtung) befindet sich das Fahrzeug in der dargestellten Position und kann hier die Palette 24 absetzen. Auf diese Weise entsteht die horizontale Blocklagerung der Paletten 24, 26, 28. Bei dem vorstehenden Verfahren ist es selbstverständlich so, dass das Flurförderzeug beispielsweise nach dem Absetzen der Paletten 26 automatisch durch das Lager fahren kann, um die Palette 24 an einem anderen Ort aufzunehmen, dann kehrt es zu der Position zurück. Gleiches gilt beim Aufnehmen der Paletten.

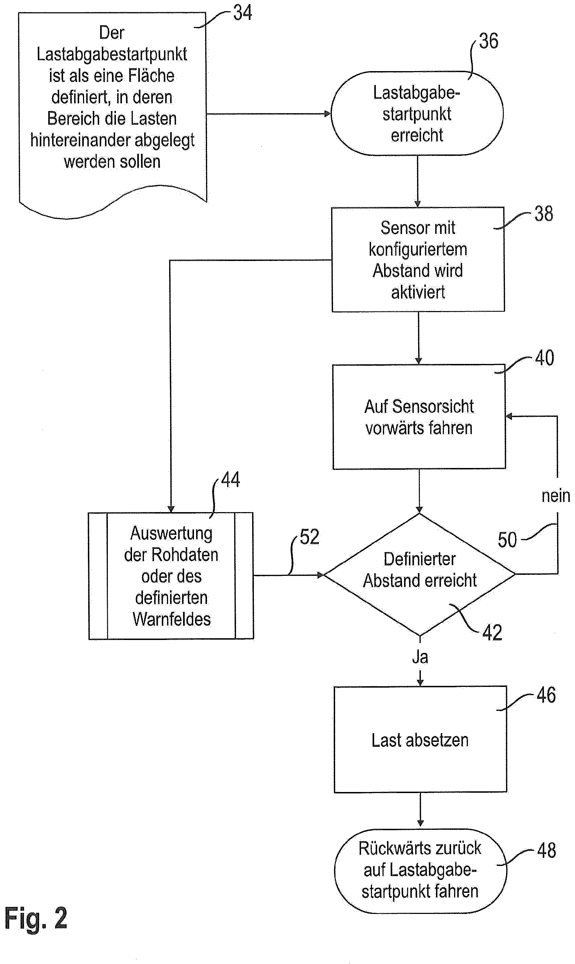

Das bei dem erfindungsgemäßen Flurförderzeug in der Fahrzeugsteuerung ablaufende Verfahren ist in Fig. 2 dargestellt. Das Verfahren setzt mit Schritt 34 ein, in dem ein Lastabgabestartpunkt definiert wird. Die Definition erfolgt über eine Fläche bzw. einen Bereich in der Fläche, von dem ausgehend die Lasten hintereinander, also entlang einer Reihe, abgelegt werden sollen. Hierbei handelt es sich um eine horizontale Blocklagerung, bei der ein vorgegebener Abstand zwischen den einzelnen Lagergütern vorgesehen ist. Der Zwischenraum kann hierbei beispielsweise dafür dienen, dass die einzelnen Lasten besser zugänglich sind.

Verfahrensschritt 36 beginnt damit, dass der in Schritt 34 definierte Lastabgabestartpunkt durch das Flurförderzeug erreicht ist. Wenn der Lastabgabestartpunkt erreicht ist, wird ein Sensor mit konfiguriertem Abstand aktiviert, dies entspricht Schritt 38. In Schritt 38 wird in der Fahrzeugsteuerung der automatische Betrieb für die horizontale Blocklagerung eingeleitet.

Bei einer erstmaligen Aktivierung mit Schritt 38 wird in einem nachfolgenden Schritt 40 das Fahrzeug um ein Stück vorwärts gefahren. Die Signalerfassung durch das Personenschutzsystem ist bei dieser Fahrt des Flurförderzeugs aktiv. In einem nachfolgenden Schritt 42 wird überprüft, ob der definierte Abstand für das Fahrzeug erreicht ist. Ist dies der Fall, so wird in Schritt 46 die Last abgesetzt und das Fahrzeug kehrt in Schritt 48 zu dem Lastabgabestartpunkt zurück. Ist der definierte Abstand nicht direkt erreicht, so kehrt das Verfahren über den Verweis 50 zu Schritt 40 zurück. In Schritt 40 erfolgt wieder eine begrenzte Vorwärtsfahrt. Über die Abfrage 42, ob der definierte Abstand erreicht ist, tastet sich das Flurförderzeug mit den einzelnen Schritten vorwärts. Für die Abfrage 42, ob der definierte Abstand erreicht ist, erfolgt in Schritt 44 eine Auswertung der Abstandsdaten aus dem Abstandmessgerät. Die Abstandsdaten werden in Schritt 44 entweder als Rohdaten, d. h. als Abstandswerte ausgewertet, oder im Hinblick auf die definierten Schutzfelder des Personenschutzsystems. Die so gewonnenen Abstandsdaten 52 liegen der Abfrage, ob der gewünschte Abstand erreicht wurde, zugrunde.

Im Hinblick auf die beiden Varianten in Schritt 44 zur Auswertung der Abstandsdaten kann bei der Benutzung der Schutzzone der gewünschte Abstand zwischen den Lastträgern bereits werkseitig berücksichtigt werden. Hierbei wird dann ein Flurförderzeug mit bereits entsprechend eingestellten Schutzzonen ausgeliefert. Erfolgt dagegen in Schritt 44 eine Auswertung der Rohdaten, also der erfassten Abstandswerte, so kann nach Auslieferung mit Hilfe eines Teach-In-Vorgangs die entsprechende Anpassung vorgenommen werden. Dies bedeutet, dass das Fahrzeug mit aufgenommener Last für den Teach-In-Vorgang manuell einmalig mit dem gewünschten Abstand zu der vorherigen Last positioniert wird. Die über die Rohdaten ermittelte Entfernung wird gespeichert, wobei dann anschließend das Fahrzeug im automatischen Betrieb auf die gespeicherten Daten zurückgreifen kann und die Last in dem definierten Abstand absetzt. Vorteil dieser Variante ist, dass eine Einstellung werkseitig nicht notwendig ist und der Kunde selbst oder ein Kundendiensttechniker im Auftrag des Kunden den Abstand beliebig verändern und neu einstellen kann.

### Bezugszeichenliste

- 10: Fahrzeug
- 12: Antriebsteil
- 14: Lastteil
- 16: Steuerorgan
- 18: Hubmast
- 20: Fahrzeugsteuerung
- 22: Lasttragmittel
- 24: Palette
- 26: Palette
- 28: Palette
- 30: Strecke
- 32: Abstand
- 34: Verfahrensschritt
- 36: Verfahrensschritt
- 38: Verfahrens schritt
- 40: Verfahrensschritt
- 42: Verfahrensschritt
- 44: Verfahrensschritt
- 46: Verfahrensschritt
- 48: Verfahrensschritt
- 50: Verweis
- 52: Abstandsdaten

## Patentansprüche

1. Flurförderzeug (10), das eine Fahrzeugsteuerung (20) für einen automatischen Betrieb, ein in dem automatischen Betrieb gesteuertes Lasttragmittel (22), einen in dem automatischen Betrieb gesteuerten Fahrantrieb und ein Personenschutzsystem aufweist, das mindestens eine Schutzzone vor dem Lasttragmittel (22) erfasst und für die Fahrzeugsteuerung (20) auswertet, wobei das Personenschutzsystem eine Abstandsmesseinrichtung aufweist, die Abstandsdaten (52) zu Gegenständen und Hindernissen innerhalb der mindestens einen Schutzzone erfasst, **dadurch gekennzeichnet, dass** die Fahrzeugsteuerung (20) dazu ausgebildet ist, mehrere Ladungsträger in einem vorbestimmten Abstand (32) zueinander abzustellen und/oder aufzunehmen, wobei die Fahrzeugsteuerung (20) zur automatischen Steuerung von Lasttragmittel (22) und Fahrantrieb auf die Abstandsdaten (52) des Personenschutzsystems zurückgreift.

2. Flurförderzeug (10) nach Anspruch 1, **dadurch gekennzeichnet, dass** das Personenschutzsystem dazu ausgebildet ist, die von der Abstandmesseinrichtung gewonnenen Abstandsdaten (52) für die Fahrzeugsteuerung (20) auszuwerten.

3. Flurförderzeug (10) nach Anspruch 2, **dadurch gekennzeichnet, dass** für die Fahrzeugsteuerung (20) und/oder das Personenschutzsystem eine Teach-In-Funktion vorgesehen ist, bei der manuell ein gewünschter Abstand (32) angefahren und für den automatischen Betrieb gespeichert wird.

4. Flurförderzeug (10) nach Anspruch 1, **dadurch gekennzeichnet, dass** das Personenschutzsystem dazu ausgebildet ist, den vorbestimmten Abstand für die Ladungsträger mit Hilfe der mindestens einen Schutzzone zu erkennen.

5. Flurförderzeug (10) nach einem der Ansprüche 1 bis 4, **dadurch gekennzeichnet, dass** der Fahrantrieb für eine automatische Fahrt angesteuert wird, bis das Personenschutzsystem den vorbestimmten Abstand (32) erkannt hat.

6. Flurförderzeug (10) nach einem der Ansprüche 1 bis 5, **dadurch gekennzeichnet, dass** mindestens eine erste Schutzzone für den Personenschutz und mindestens eine zweite Schutzzone für einen automatischen Ablage-/Aufnahmevorgang von Ladungsträgern in einem vorgegebenen Abstand vorgesehen sind.

7. Flurförderzeug (10) nach Anspruch 6, **dadurch gekennzeichnet, dass** die erste Schutzzone für die Dauer des automatisierten Ablage-/Aufnahmevorgangs abgeschaltet ist.

8. Flurförderzeug (10) nach einem der Ansprüche 1 bis 7, **dadurch gekennzeichnet, dass** das Abstandsmessgerät einen Laserscanner aufweist.

## Claims

1. An industrial truck (10) that has a vehicle control (20) for automatic operation, a load bearing means (22) controlled in automatic operation, a drive system controlled in automatic operation and a personal safety system that detects at least one safety zone in front of the load bearing means (22) and evaluates it for the vehicle control (20), wherein the personal safety system has a distance measuring apparatus which detects distance data (52) on objects and obstacles within the at least one safety zone, **characterized in that** the vehicle control (20) is designed to deposit and/or pick up a plurality of load carriers at a predetermined distance (32) from each other, wherein the vehicle control (20) accesses the distance data (52) of the personal safety system to automatically control load bearing means (22) and the drive system.

2. The industrial truck (10) according to claim 1, **characterized in that** the personal safety system is configured to evaluate the distance data (52) obtained from the distance measuring apparatus for the vehicle control (20).

3. The industrial truck (10) according to claim 2, **characterized in that** a teach-in function is provided for the vehicle control (20) and/or the personal safety system in which a desired distance (32) is manually approached and saved for automatic operation.

4. The industrial truck (10) according to claim 1, **characterized in that** the personal safety system is configured to recognize the predetermined distance for the load carriers with the assistance of the at least one safety zone.

5. The industrial truck (10) according to one of claims 1 to 4, **characterized in that** the drive system is controlled for automatic driving until the personal safety system has recognized the predetermined distance (32).

6. The industrial truck (10) according to one of claims 1 to 5, **characterized in that** at least one first safety zone is provided for personal safety, and at least one second safety zone is provided for an automatic depositing/pickup process by load carriers at a given distance.

7. The industrial truck (10) according to claim 6, **characterized in that** the first safety zone is turned off for the duration of the automated depositing/pickup process.

8. The industrial truck (10) according to one of claims 1 to 7, **characterized in that** the distance measuring device has a laser scanner.

## Revendications

1. Chariot de manutention (10) doté d'une commande de véhicule (20) pour un fonctionnement automatique, d'un moyen de support de charge (22) commandé dans le fonctionnement automatique, un dispositif d'entraînement commandé dans le fonctionnement automatique et un système de protection des personnes, lequel détecte au moins une zone de protection devant le moyen de support de charge (22) et évalue celle-ci pour la commande de véhicule (20), dans lequel le système de protection des personnes présente un dispositif de mesure de distance collectant des données de distance (52) par rapport à des objets et des obstacles dans l'au moins une zone de protection, **caractérisé en ce que** la commande de véhicule (20) est conçue pour déposer et/ou recevoir plusieurs porte-charges à une distance prédéfinie (32) les uns par rapport aux autres, dans lequel la commande de véhicule (20) utilise les données de distance (52) du système de protection des personnes pour la commande automatique des moyens de support de charge (22) et du dispositif d'entraînement.

2. Chariot de manutention (10) selon la revendication 1, **caractérisé en ce que** le système de protection des personnes est conçu pour évaluer les données de distance (52) acquises par le dispositif de mesure de distance pour la commande de véhicule (20).

3. Chariot de manutention (10) selon la revendication 2, **caractérisé en ce qu'**il est prévu une fonction d'apprentissage pour la commande de véhicule (20) et/ou le système de protection des personnes, avec laquelle une distance souhaitée (32) est parcourue manuellement et enregistrée pour le fonctionnement automatique.

4. Chariot de manutention (10) selon la revendication 1, **caractérisé en ce que** le système de protection des personnes est conçu pour reconnaître la distance prédéfinie pour le porte-charge à l'aide de l'au moins une zone de protection.

5. Chariot de manutention (10) selon l'une des revendications 1 à 4, **caractérisé en ce que** le dispositif d'entraînement est actionné pour un déplacement automatique, jusqu'à la reconnaissance de la distance prédéfinie (32) par le système de protection des personnes.

6. Chariot de manutention (10) selon l'une des revendications 1 à 5, **caractérisé en ce qu'**il est prévu au moins une première zone de protection pour la protection des personnes et au moins une deuxième zone de protection pour une opération de dépôt/réception automatique de porte-charges à une distance prédéfinie.

7. Chariot de manutention (10) selon la revendication 6, **caractérisé en ce que** la première zone de protection est éteinte pour la durée de l'opération de dépôt/réception automatisée.

8. Chariot de manutention (10) selon l'une des revendications 1 à 7, **caractérisé en ce que** l'appareil de mesure de distance présente un scanner laser.
